# EUROPÄISCHE PATENTSCHRIFT

(11) **EP 3 526 806 B1**
(45) Veröffentlichungstag und Bekanntmachung des Hinweises auf die Patenterteilung: **20.04.2022**
(21) Anmeldenummer: 17804792.4
(22) Anmeldetag: 29.09.2017
(51) Int. Cl.: H01H 13/16, B60N 2/00, H01H 13/48, B60R 21/015, H01H 13/06

(54) **SITZBELEGUNGSSENSOR**
SEAT OCCUPANCY DETECTOR
DÉTECTEUR D'OCCUPATION DE SIÈGE

(30) Priorität: 13.10.2016 DE 202016006403 U
(43) Veröffentlichungstag der Anmeldung: 21.08.2019
(73) Patentinhaber: SCHERDEL Marienberg GmbH, 09496 Marienberg (DE)
(72) Erfinder: SEITENGLANZ, Jan, 09429 Wolkenstein (DE); FIEDLER, Thomas, 09518 Grossrückerswalde (DE); RIESS, Mirko, 09114 Chemnitz (DE)
(74) Vertreter: Findeisen Neumann Scheit Partnerschaft mbB
(86) Internationale Anmeldenummer: PCT/DE2017/000330
(87) Internationale Veröffentlichungsnummer: WO 2018/068777

(56) Entgegenhaltungen:
- EP-A2- 2 431 990
- DE-A1-102007 027 218
- DE-A1-102010 043 417
- US-A- 4 316 066
- US-A1- 2013 126 322

## Beschreibung

Die Erfindung betrifft einen Sitzbelegungssensor mit einem Grundzustand und einem Schaltzustand, wobei der Sitzbelegungssensor aus einem Gehäuse, einem durch dieses Gehäuse geführten und gegen dieses bewegbaren Schaltknopf, einem ersten elektrischen Kontakt, einem zweiten elektrischen Kontakt und einer im Gehäuse angeordneten Tellerfeder besteht, wobei die Tellerfeder eine konkave Seite, eine konvexe Seite, einen Außenrand und einen Innenrand aufweist und die Tellerfeder weiterhin in einen Ausgangszustand und in einen durchgeschnappten Zustand bringbar ist und der erste und der zweite elektrische Kontakt aus dem Gehäuse heraus geführt sind.

Kraftfahrzeuge weisen zahlreiche Sicherheits- und Komfortsysteme auf. Dabei entsteht mehr und mehr der Bedarf, diese Systeme abhängig von der Sitzbelegung des Kraftfahrzeuges zu betreiben. So ist es beispielsweise bei Airbagsystemen wichtig, im Falle eines Unfalls die Airbags am Beifahrersitz nicht auszulösen, wenn dieser mit einer Babyschale belegt ist. Weiterhin ist das Ausgeben eines Warnsignals erwünscht, wenn ein Sitz des Kraftfahrzeuges mit einer Person belegt ist und diese aber den Sicherheitsgurt nicht angelegt hat. Die Kenntnis der Sitzbelegung in einem Kraftfahrzeug kann ebenfalls für eine optimierte Luftstromführung bei der Innenraumlüftung genutzt werden. All dies macht die Erkennung der Sitzbelegung an Kraftfahrzeugsitzen notwendig. Neben der Sitzbelegungserkennung an Fahrer- und Beifahrersitzen wird diese auch zunehmend im Bereich der Rücksitze benötigt.

Für die Erkennung einer Sitzbelegung werden in der Sitzfläche eines Kraftfahrzeugsitzes üblicherweise Sitzbelegungssensoren angeordnet. Ein derartiger Sitzbelegungssensor wird beispielsweise in DE 10 2006 011 015 A1 beschrieben. Dieser weist ein Gehäuse auf, in dem ein Stellglied, ein Permanentmagnet, ein als Spiralfeder ausgebildetes Federelement und ein Halleffektsensor untergebracht sind. Bei einer Sitzbelegung wird eine Kraft auf das Stellglied übertragen und damit der Permanentmagnet bei gleichzeitiger Spannung des Federelements gegen den Halleffektsensor bewegt. Durch die Änderung des Magnetfeldes im Bereich des Halleffektsensors kann die Bewegung als charakteristische Hallspannung erkannt werden. Problematisch ist allerdings dass der Schaltpunkt nicht genau festgelegt ist. Die Bewegungstiefe des Permanentmagneten wird beispielsweise vom Gewicht oder der Sitzposition der auf dem Kraftfahrzeugsitz sitzenden Person beeinflusst.

In US 3,133,170 wird ein Sitzbelegungssensor vorgeschlagen, der ein Gehäuse, ein Stellglied, ein als Tellerfeder ausgebildetes Federelement, drei elektrische Kontakte und einen Kontaktstreifen aufweist. In einem Grundzustand des Sitzbelegungssensors wird die Tellerfeder gegen den Kontaktstreifen gedrückt, wodurch ein Stromfluss zwischen dem ersten, dem Kontaktstreifen und dem zweiten elektrischen Kontakt möglich ist. Beim Betätigen des Sitzbelegungssensors drückt ein durch das Gehäuse geführter Schaltknopf das Stellglied gegen die Tellerfeder, wodurch diese gespannt und von dem Kontaktstreifen gelöst wird. Beim Durchschnappen der Tellerfeder wird dann ein Kontakt zwischen dem ersten und dritten der drei elektrischen Kontakte hergestellt. Dieser Sitzbelegungssensor ist grundsätzlich für den Einbau in Fahrer- und Beifahrersitzen geeignet, wohingegen im Bereich der Rücksitzbank eines Kraftfahrzeuges die Verwendung dieses Sitzbelegungssensors problematisch ist. Im Gegensatz zu Fahrer- und Beifahrersitz ist die Rücksitzbank meist direkt auf Karosserieteilen montiert, wodurch deutlich begrenzte Platzverhältnisse unterhalb der Rücksitzbank vorliegen und damit eine Integration von Sensoren mit großen Bauhöhen häufig nicht möglich ist.

Die DE 10 2010 043 417 A1 beschreibt einen Sitzbelegungssensor gemäß dem Oberbegriff des Anspruchs 1, wobei dieser aus einem Gehäuse mit innenliegender elektrischer Schaltvorrichtung und einem Betätigungselement besteht. Die elektrische Schaltvorrichtung weist einen Schaltungsträger mit Schaltkontakten und eine auf dem Schaltungsträger aufliegende Tellerfeder auf. Bei einer Belastung des Sitzbelegungssensors wird eine Kraft vom Betätigungselement auf die Tellerfeder übertragen, wodurch diese bei ausreichender Krafteinwirkung zur Vermeidung größerer Schaltgeräusche ohne durchzuschnappen auf den inneren Schaltkontakt aufgedrückt wird. Dabei werden die Schaltkontakte auf dem Schaltungsträger über die Federscheibe selbst miteinander verbunden. Nachteil dieser Lösung ist, dass der Schaltweg aufgrund der gewählten Federscheibenausführung und deren Schaltanordnung sehr gering gehalten und der Schaltpunkt genau definiert werden muss.

Aufgabe der Erfindung ist es, einen Sitzbelegungssensor zu schaffen, der durch einen definierten Schaltpunkt ausgezeichnet ist und gleichzeitig eine Bauhöhe aufweist, die eine Integration dieses Sitzbelegungssensors in den Bereich der Sitzfläche einer Rücksitzbank eines Kraftfahrzeuges zulässt.

Diese Aufgabe wird mit einem Sitzbelegungssensor gemäß den Merkmalen des Anspruchs 1 gelöst. Der erste und der zweite elektrische Kontakt liegen der konkaven Seite und der Schaltknopf der konvexen Seite der Tellerfeder gegenüber. Der Außenrand der Tellerfeder ist auf ihrer konkaven Seite im Gehäuse abgestützt. Weiterhin steht die Tellerfeder mit einer elektrisch leitfähig ausgebildeten Schaltzunge in Wirkverbindung. Sowohl im Grundzustand als auch im Schaltzustand ist ein dem ersten elektrischen Kontakt zugeordneter Bereich der Schaltzunge mit dem ersten elektrischen Kontakt elektrisch verbunden. Im Grundzustand liegt die Tellerfeder in ihrem Ausgangszustand vor und der zweite elektrische Kontakt ist von dem dem ersten elektrischen Kontakt zugeordneten Bereich der Schaltzunge elektrisch getrennt. Im Schaltzustand bei dem der Schaltknopf ebenfalls auf dem Innenrand der Tellerfeder abgestützt ist, liegt die Tellerfeder in ihrem durchgeschnappten Zustand vor und der zweite elektrische Kontakt ist mit dem dem ersten elektrischen Kontakt zugeordneten Bereich der Schaltzunge elektrisch verbunden.

Weiterhin ist vorgesehen, dass die Schaltzunge aus einem ersten Federelement und einem zweiten Federelement besteht und dass der dem ersten elektrischen Kontakt zugeordnete Bereich der Schaltzunge das erste Federelement und der dem zweiten elektrischen Kontakt zugeordnete Bereich der Schaltzunge das zweite Federelement ist und dass ein Ende des ersten Federelementes und ein Ende des zweiten Federelementes im Gehäuse lagefixiert sind und dass im Grundzustand das erste und das zweite Federelement elektrisch voneinander getrennt sind und dass im Schaltzustand der Schaltknopf auf dem ersten Federelement aufliegt und das erste Federelement auf dem zweiten Federelement abgestützt ist.

Ein derartiger Sitzbelegungssensor weist durch seine kompakte Bauform nur eine geringe Bauhöhe auf. Damit ist es möglich diesen Sitzbelegungssensor auch in die Sitzfläche einer Rücksitzbank eines Kraftfahrzeuges zu integrieren. Dabei wird der Sitzbelegungssensor so in oder unterhalb der Rücksitzbank integriert, dass der Schaltknopf in Richtung Sitzfläche der Rücksitzbank ausgerichtet ist. Sitzt keine Person auf der Sitzfläche, wirkt keine Kraft auf den Schaltknopf und der Sitzbelegungssensor befindet sich im Grundzustand. Sitzt hingegen eine Person auf der Sitzfläche, wirkt eine Kraft auf den Schaltknopf, wodurch der Sitzbelegungssensor in seinen Schaltzustand versetzt wird.

Im Grundzustand des Sitzbelegungssensors ist zwischen dem ersten und dem zweiten elektrischen Kontakt kein Stromfluss über die Schaltzunge möglich. Im Schaltzustand wird die Tellerfeder durchgeschnappt und das erste Federelement drückt auf das zweite Federelement der Schaltzunge. Da die Schaltzunge und damit die beiden Federelemente elektrisch leitfähig ausgebildet sind, besteht im Schaltzustand zwischen dem ersten und zweiten Federelement eine elektrische Verbindung. Am ersten und zweiten elektrischen Kontakt kann damit ein Stromfluss über die beiden Federelemente geführt werden, wobei dieser Stromfluss dann den Schaltzustand des Sitzbelegungssensors von außen erkennbar macht. Die aus dem Gehäuse herausgeführten Kontakte stehen beispielsweise mit einer Steuereinheit in Verbindung. Über eine Spannungsquelle können dann der erste und der zweite elektrische Kontakt mit einer Spannung beaufschlagt werden. Wird dann ein Stromfluss zwischen dem ersten und dem zweiten elektrischen Kontakt von der Steuereinheit registriert, befindet sich der Sitzbelegungssensor in seinem Schaltzustand. Im Grundzustand wird trotz anliegender Spannung kein Stromfluss von der Steuereinheit registriert werden. Der jeweilige Zustand des Sitzbelegungssensors und die damit verknüpfte Information, ob eine Person auf der Sitzfläche sitzt oder nicht, kann dann von der Steuereinheit für die Regelung weiterer angeschlossener Systeme (wie z.B. Airbag- oder Lüftungssystemen) genutzt werden.

Nachfolgend wird ein Ausführungsbeispiel der Erfindung anhand der Zeichnungen erläutert.

Es zeigen:
- Fig. 1: Explosionszeichnung eines erfindungsgemäßen Sitzbelegungssensors
- Fig. 2: Schnittdarstellung des Sitzbelegungssensors gemäß Fig. 1 im Grundzustand

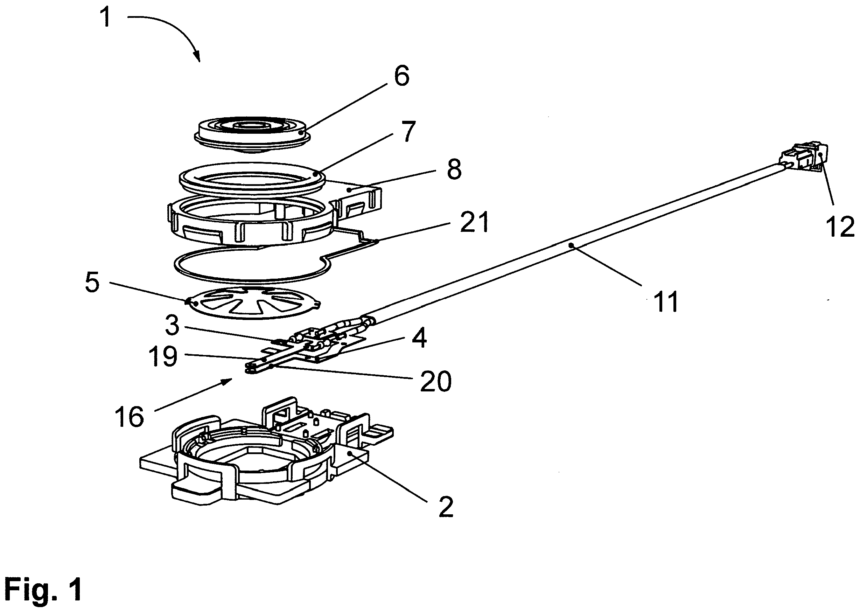

**Fig. 1** zeigt eine Explosionsdarstellung eines erfindungsgemäßen Sitzbelegungssensors 1. Dieser besteht aus einem Schaltgehäuse 2, einem ersten elektrischen Kontakt 3, einem zweiten elektrischen Kontakt 4, einer Tellerfeder 5, einem Schaltknopf 6, einer Dichtmembran 7 und einem Gehäusedeckel 8. Das Schaltgehäuse 2 und der Gehäusedeckel 8 bilden gemeinsam das Gehäuse des Sitzbelegungssensors 1, wobei grundsätzlich auch ein andersteiliger Aufbau des Gehäuses denkbar ist. Die Tellerfeder 5 weist eine konkave Seite 9 und eine konvexe Seite 10 auf. Der erste und der zweite elektrische Kontakt 3, 4 liegen der konkaven Seite 9 und der Schaltknopf 6 der konvexen Seite 10 der Tellerfeder 5 gegenüber, wobei der erste und der zweite elektrische Kontakt 3, 4 aus dem Gehäuse herausgeführt sind. Über Leitungen 11 sind diese Kontakte mit einem Stecker 12 verbunden, der beispielweise an eine Steuereinheit für ein Airbag- oder Lüftungssystem eines Kraftfahrzeuges angeschlossen wird. Die Steuereinheit ist allerdings nicht dargestellt. Der erste elektrische Kontakt 3 und der zweite elektrische Kontakt 4 sind jeweils als eine Kontaktfahne mit einem Kontaktstift ausgebildet. Der Sitzbelegungssensor 1 kann einen Grundzustand und einen Schaltzustand einnehmen. Das Gehäuse ist beispielsweise aus Kunststoff gefertigt.

Die Tellerfeder 5 weist einen Außenrand 13 und einen Innenrand 14 auf, wobei der Innenrand 14 mit Federzungen 15 ausgebildet ist. Diese Federzungen 15 sind allerdings nicht zwingend. Beispielsweise ist auch eine mit den Konturen eines Kreisringes ausgebildete Tellerfeder 5 möglich. Die Tellerfeder 5 kann einen Ausgangszustand und einen durchgeschnappten Zustand einnehmen. Der durchgeschnappte Zustand einer Tellerfeder 5 ist dem Fachmann bekannt und wird an dieser Stelle nicht näher erläutert. Als Ausgangszustand wird der nicht durchgeschnappte Zustand der Tellerfeder 5 verstanden. Dabei kann die Tellerfeder 5 im Ausgangszustand auch leicht vorgespannt sein, ohne dass diese durchschnappt. Die Tellerfeder 5 ist beispielsweise aus Federstahl hergestellt.

Eine Schaltzunge 16 des Sitzbelegungssensors weist ein erstes Federelement 19 und ein zweites Federelement 20 auf. Weiterhin ist am Übergang zwischen Schaltgehäuse 2 und Gehäusedeckel 8 eine Dichtung 21 vorgesehen.

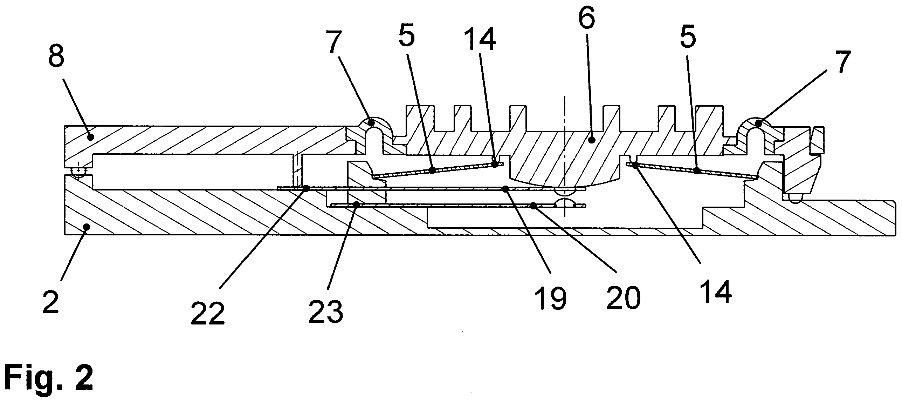

In **Fig. 2** ist eine Schnittdarstellung des Sitzbelegungssensors gemäß **Fig. 1** im Grundzustand, vorgespannt, kurz vor dem Schaltzustand abgebildet. Der Gehäusedeckel 8 ist auf dem Schaltgehäuse 2 aufgesetzt, sodass die Tellerfeder 5, der erste elektrische Kontakt 3 und der zweite elektrische Kontakt 4 vom Gehäuse umgeben sind. Der Schaltknopf 6 ist durch den Gehäusedeckel 8 und gegen dieses bewegbar geführt. Im Bereich des durchgeführten Schaltknopfes 6 ist das Gehäuse mit der Dichtmembran 7 abgedichtet. Der Schaltknopf 6 liegt auf dem Innenrand 14 der Tellerfeder 5 auf. Der Außenrand 13 der Tellerfeder 5 ist auf ihrer konkaven Seite 9 am Schaltgehäuse 2 abgestützt. Das erste Federelement 19 ist elektrisch mit dem ersten elektrischen Kontakt 3 und das zweite Federelement 20 ist elektrisch mit dem zweiten elektrischen Kontakt 4 verbunden. Somit sind das erste Federelement 19 der dem ersten elektrischen Kontakt 3 zugeordnete Bereich der Schaltzunge 16 und das zweite Federelement 20 der dem zweiten elektrischen Kontakt 4 zugeordnete Bereich der Schaltzunge 16 zu verstehen. Je ein Ende 22, 23 des ersten und zweiten Federelementes 19, 20 sind im Gehäuse lagefixiert. Im Grundzustand sind die beiden Federelemente 19, 20 mit einem Abstand zueinander angeordnet, sodass zwischen beiden keine elektrische Verbindung besteht.

Bei einer Krafteinwirkung auf den Schaltknopf 6 wird die Kraft auf die Tellerfeder 5 übertragen, wodurch diese gespannt und bei ausreichender Kraft in ihren durchgeschnappten Zustand versetzt wird. Damit bewegt sich der Schaltknopf 6 in Richtung Schaltgehäuse 2 und drückt das erste Federelement 19 auf das zweite Federelement 20 der Schaltzunge 16. Da die Schaltzunge 16 und damit die beiden Federelemente 19, 20 elektrisch leitfähig ausgebildet sind, besteht im Schaltzustand zwischen dem ersten und zweiten Federelement 19, 20 eine elektrische Verbindung. Am ersten und zweiten elektrischen Kontakt 3, 4 kann damit ein Stromfluss über die beiden Federelemente 19, 20 geführt werden, wobei dieser Stromfluss dann den Schaltzustand des Sitzbelegungssensors 1 von außen erkennbar macht.

### Bezugszeichenliste

- 1: Sitzbelegungssensor
- 2: Schaltgehäuse
- 3: erster elektrischer Kontakt
- 4: zweiter elektrischer Kontakt
- 5: Tellerfeder
- 6: Schaltknopf
- 7: Dichtmembran
- 8: Gehäusedeckel
- 9: konkave Seite
- 10: konvexe Seite
- 11: Leitungen
- 12: Stecker
- 13: Außenrand
- 14: Innenrand
- 15: Federzungen
- 16: Schaltzunge
- 17: erstes Ende
- 18: zweites Ende
- 19: erstes Federelement
- 20: zweites Federelement
- 21: Dichtung
- 22: Ende des ersten Federelementes
- 23: Ende des zweiten Federelementes

## Patentansprüche

1. Sitzbelegungssensor mit einem Grundzustand und einem Schaltzustand, wobei der Sitzbelegungssensor aus einem Gehäuse (2), einem durch dieses Gehäuse geführten und gegen dieses bewegbaren Schaltknopf (6), einem ersten elektrischen Kontakt (3), einem zweiten elektrischen Kontakt (4) und einer im Gehäuse angeordneten Tellerfeder (5) besteht, wobei die Tellerfeder eine konkave Seite, eine konvexe Seite, einen Außenrand und einen Innenrand aufweist und die Tellerfeder weiterhin in einen Ausgangszustand und in einen durchgeschnappten Zustand bringbar ist und der erste und der zweite elektrische Kontakt aus dem Gehäuse heraus geführt sind, wobei der erste elektrische Kontakt (3) und der zweite elektrische Kontakt (4) der konkaven Seite (9) und der Schaltknopf (6) der konvexen Seite (10) der Tellerfeder (5) gegenüberliegen und wobei der Außenrand (13) der Tellerfeder (5) auf ihrer konkaven Seite (9) im Gehäuse abgestützt ist, **dadurch gekennzeichnet**
**dass** die Tellerfeder (5) mit einer
elektrisch leitfähig ausgebildeten Schaltzunge (16) in Wirkverbindung steht, wobei sowohl im Grundzustand als auch im Schaltzustand ein dem ersten elektrischen Kontakt (3) zugeordneter Bereich der Schaltzunge (16) mit dem ersten elektrischen Kontakt (3) elektrisch verbunden ist und
**dass** im Grundzustand die Tellerfeder (5) in ihrem Ausgangszustand vorliegt und der zweite elektrische Kontakt (4) von dem dem ersten elektrischen Kontakt (3) zugeordneten Bereich der Schaltzunge (16) elektrisch getrennt ist und
**dass** im Schaltzustand der Schaltknopf (6) auf dem Innenrand (14) der Tellerfeder (5) abgestützt ist, die Tellerfeder (5) in ihrem durchgeschnappten Zustand vorliegt und der zweite elektrische Kontakt (4) mit dem dem ersten elektrischen Kontakt (3) zugeordneten Bereich der Schaltzunge (16) elektrisch verbunden ist und dass die Schaltzunge (16) aus einem ersten Federelement (19) und einem zweiten Federelement (20) besteht und dass der dem ersten elektrischen Kontakt (3) zugeordnete Bereich der Schaltzunge (16) das erste Federelement (19) und der dem zweiten elektrischen Kontakt (4) zugeordnete Bereich der Schaltzunge (16) das zweite Federelement (20) ist und dass ein Ende (22) des ersten Federelementes (19) und ein Ende (23) des zweiten Federelementes (20) im Gehäuse lagefixiert sind und dass im Grundzustand das erste und das zweite Federelement (19, 20) elektrisch voneinander getrennt sind und dass im Schaltzustand der Schaltknopf (6) auf dem ersten Federelement (19) aufliegt und das erste Federelement (19) auf dem zweiten Federelement (20) abgestützt ist.

## Claims

1. A seat-occupancy sensor with a base state and a switched state, wherein the seat-occupancy sensor consists of a housing (2), a switching knob (6) that passes through this housing and can move against it, a first electrical contact (3), a second electrical contact (4) and a disc spring (5) located in the housing, this disc spring having a concave side, a convex side, an outer edge and an inner edge, and wherein the disc spring further has an initial state and can be put into a snapped-through state, and the first electrical contact and the second electrical contact are routed out of the housing, with the first electrical contact (3) and the second electrical contact (4) facing the concave side (9) and the switching knob (6) facing the convex side (10) of the disc spring (5), and the outer edge (13) of the disc spring (5) being supported on its concave side (9) in the housing,
**characterized in that**
the disc spring (5) has a mechanical connection with an electrically conductive switching reed (16), a part of the switching reed (16) assigned to the first electrical contact (3) is electrically connected to the first electrical contact (3) in both the base state and the switched state, and
in the base state, the disc spring (5) is present in its initial state and the second electrical contact (4) is electrically isolated from the part of the switching reed (16) assigned to the first electrical contact (3), and
in the switched state, the switching knob (6) is supported on the inner edge (14) of the disc spring (5), the disc spring (5) is present in its snapped-through state and the second electrical contact (4) is electrically connected to the part of the switching reed (16) assigned to the first electrical contact (3), and that the switching reed (16) consists of a first spring element (19) and a second spring element (20), and that the part of the switching reed (16) assigned to the first electrical contact (3) is the first spring element (19) and the part of the switching reed (16) assigned to the second electrical contact (4) is the second spring element (20), and that one end (22) of the first spring element (19) and one end (23) of the second spring element (20) are in fixed positions in the housing, and that in the base state, the first and the second spring elements (19, 20) are electrically isolated from one another, and in the switched state, the switching knob (6) rests on the first spring element (19) and the first spring element (19) is supported on the second spring element (20).

## Revendications

1. Capteur d'occupation de siège ayant un état de base et un état de commutation, le capteur d'occupation de siège étant constitué d'un boîtier (2), d'un bouton de commutation (6) qui est guidé à travers ce boîtier et qui peut être déplacé contre celui-ci, d'un premier contact électrique (3), d'un second contact électrique (4) et d'une rondelle Belleville (5) disposée dans le boîtier, la rondelle Belleville ayant un côté concave, un côté convexe, un bord extérieur et un bord intérieur, et pouvant en outre être amenée dans un état initial et dans un état encliqueté, et le premier et le second contacts électriques étant guidés hors du boîtier, le premier contact électrique (3) et le second contact électrique (4) se trouvant en face du côté concave (9) et le bouton de commutation (6) se trouvant en face du côté convexe (10) de la rondelle Belleville (5), et le bord extérieur (13) de la rondelle Belleville (5) étant soutenu dans le boîtier sur son côté concave (9),
**caractérisé en ce que**
la rondelle Belleville (5) est connectée en liaison fonctionnelle à une languette de commutation (16) électriquement conductrice, une zone de la languette de commutation (16) associée au premier contact électrique (3) étant reliée électriquement au premier contact électrique (3) à la fois dans l'état de base et dans l'état de commutation, et
**en ce que** dans l'état de base, la rondelle Belleville (5) est dans son état initial et le second contact électrique (4) est isolé électriquement de la région de la languette de commutation (16) associée au premier contact électrique (3), et
**en ce que**, dans l'état de commutation, le bouton de commutation (6) prend appui sur le bord intérieur (14) de la rondelle Belleville (5), la rondelle Belleville (5) se trouve dans son état encliqueté et le second contact électrique (4) est relié électriquement à la zone de la languette de commutation (16) qui est associée au premier contact électrique (3), et **en ce que** la languette de commutation (16) comprend un premier élément ressort (19) et un second élément ressort (20), et **en ce que** la zone de la languette de commutation (16) qui est associée au premier contact électrique (3) est le premier élément ressort (19), et la zone de la languette de commutation (16) qui est associée au second contact électrique (4) est le second élément ressort (20), et **en ce qu'**une extrémité (22) du premier élément ressort (19) et une extrémité (23) du second élément ressort (20) sont fixées en position dans le boîtier, et **en ce que**, dans l'état de base, les premier et second éléments ressort (19, 20) sont électriquement séparés l'un de l'autre, et **en ce que**, dans l'état de commutation, le bouton de commutation (6) repose sur le premier élément ressort (19) et le premier élément ressort (19) prend appui sur le second élément ressort (20).
